# EUROPEAN PATENT APPLICATION

(11) **EP 2 090 993 A1**
(43) Date of publication of application: **19.08.2009**
(21) Application number: 09250351.5
(22) Date of filing: 12.02.2009
(51) Int. Cl.: G06F 17/30

(54) **A generalised self-referential file system**

(30) Priority: 12.02.2008 GB 0802573
(71) Applicant: Polar Extreme Research Limited, London SW6 IRW (GB)
(72) Inventor: Mather, Andrew Harvey, London SW6 1RW (GB)
(74) Representative: Reeve, Nicholas Edward

(57) **Abstract**

An unrestricted binary unambiguous file or memory mapped object is disclosed with a description of a corresponding reading and writing process. The file or object may be used to store data of any type. 'Binary unambiguous' is refers to a quality whereby the binary data stored within the datastore (file or memory map) is always and uniquely identified by a binary type identifier readily discerned from the self same map. Similarly, the term 'unrestricted' refers to the capacity of the protocol to accept data of any type, nature, format, structure or context, in a manner that retains the binary unambiguous nature of the invention for each data item. A storage object so created may be easily read by dedicated software, as it is of simple definition and is durable in nature. Its generality removes the need for repeated updates and versions of the underlying protocol.

## Description

The invention relates to a method, system and computer programme product for storing data of multiple types in a single logical data structure, which shall be referred to as a generalised self-referential file system.

The storage protocols currently in use in the computer industry fall broadly into two categories: those which are proprietary in nature and not intended to be shared between applications, (though specialist conversion programs may exist); and those that are intentionally public and open, and designed to store data in a reasonably generalised format. While the former are clearly restricted in scope, and difficult to interpret without skilled knowledge, even the latter public forms suffer from difficulties of ambiguity. That is to say that their content may not be automatically and unambiguously absorbed into a further destination data store, without human intervention to interpret the nature of the data contained and organise it at the destination store.

While file formats exist in their thousands, and are broadly invented to suit the nature of any underlying application, each of these is designed for a particular purpose, and rarely are the nature and content advertised for dissemination and absorption by third parties. In the same way as above, files are also unable to be absorbed immediately and automatically into a destination store without the skilled intervention of a developer, familiar with both the original data file and the destination repository.

Where such files protocols are designed with a more general intent, such as XML, they can indeed contain data that is useful, and can be absorbed programmatically into a target repository. However, this programmatic absorption can be carried out only after a skilled developer has analysed the data schema involved, and written the absorption program accordingly. For example, once a data schema is known and published, there exist mechanisms in XML to declare the schema to be of a particular type, whose details are held in a DTD (document type definition) or schema. After the schema is examined, an absorption routine can be developed that can verify that subsequent documents satisfy this schema, and can then absorb data as required. It is not possible to absorb such an XML document, without prior examination at least in the first instance of a particular schema by a human operator.

The applicant's earlier published patent GB 2,368,929, describes a facility for flexible storage of general data in a single file format, and provides a generalised relational expression for expressing relations between data items. However, that facility focuses on a particular format that, while having a minimal overhead, uses a typical and proprietary data format that would in course suffer the same vulnerability to change or error as any other proprietary format.

We have therefore appreciated that it would be desirable to provide a format that goes beyond those readily and currently available; in particular, a format that would make it possible for an application to encapsulate data in a manner that allows its later absorption into a destination data store without human interpretation being necessary, and which therefore supports an automated approach to data merging of anonymously contributed data into a destination data store.

We have also appreciated that despite the success and popularity of the various protocols that dominate data storage, transfer and display in the industry today, being respectively RDBMS (relational database management systems), XML, and HTML, it would also be highly advantageous to provide a data store that is unrestricted in scope, and essentially unrestricted in size also (subject to appropriate clustering routines to manage a plurality of discrete and necessarily fixed capacity storage devices). While it is true that databases and data repositories have been built to large and essentially unlimited scale, these databases retain their restricted schemas which prevent new information being absorbed arbitrarily and without human intervention to modify the schema where necessary.

### Summary of the Invention

The invention is defined by the independent claims to which reference should now be made. Advantageous features are set forth in the dependent claims.

In its broadest aspect, the preferred system provides an unrestricted binary unambiguous file or memory mapped object that may be used to store data of any type. As used here, the term 'binary unambiguous' is intended to refer to a quality whereby the binary data stored within the datastore (file or memory map) is always and uniquely identified by a binary type identifier readily discerned from the self same map. Similarly, the term 'unrestricted' refers to the capacity of the protocol to accept data of any type, nature, format, structure or context, in a manner that retains the binary unambiguous nature of the invention for each data item.

A storage object so created may then be easily read by dedicated software, as it is of simple definition and is durable in nature, since its generality removes the need for repeated updates and versions of the underlying protocol. A description of example reading and writing software is provided.

The nature of the invention eliminates the need for external schema documents, reserved words, symbols, and other arcane provisions, invented and required for alternate models of data storage. It is common in the art that data protocols are restricted in many ways, principally by schema (restricting context, relationships, and types), by standard types (with typically limited support for non-standard types) or symbology (commas in a CSV file, < and > in a markup file (XML, html)). Any such restriction limits the scope of data that may be contributed to a store, and typically results in requirements to declare versions of the file protocol in such a way that the particular set of special symbols and keywords can be publicised and accommodated by developers skilled in the art, and which precludes an automated generalised routine from manipulating an arbitrary file or data store in any but a trivial and inadequate manner.

The present embodiment eliminates these restrictions, and so provides a novel means of unambiguous and spontaneous contribution of data in an unrestricted and arbitrary manner, sufficient to allow true automated processing of novel data in a way that is impossible to replicate with the common popular standards of SQL, RDBMS, XML, CSV and other storage media.

### Brief Description of the Drawings

A preferred embodiment of the invention will now be described in more detail, by way of example, and with reference to the drawings in which:
Figure 1 is an illustration showing the logical structure of records stored in a data structure such as a memory map or in a file;
Figure 2 is a schematic illustration of the structure shown in Figure 1;
Figure 3 is an illustration showing in more detail an example file stored according to the preferred data storage protocol;
Figure 4 illustrates a memory map of a device, on which data according to the example protocol is written; and
Figures 5 and 6 illustrate a system utilising the example data protocol.
Figure 7 is an illustration of particular records from the file shown in Figure 3, as they would be logically stored in a Relational Database.
Figures 8 and 9 illustrate the basic processes for reading and writing single records respectively;
Figure 10 illustrates a basic process for initialising a file;
Figure 11 is an illustration of an example process for preparing a 'write' buffer prior to writing to a file;
Figure 12 is an illustration of an example process for writing records;
Figure 13 is an illustration of an alternative example process for writing records;
Figure 14 is an illustration of an example process for declaring a type;
Figure 15 is an illustration of an example process for declaring data;
Figure 16 is an illustration of an example process for extracting record bytes from a file;
Figure 17 is an illustration of an example process for reading data.

### Detailed Description of the Preferred Embodiments

The preferred embodiment of the invention comprises a binary mapped data storage protocol, for the explicit storage of data of arbitrary binary type and arbitrary content, which may be implemented in memory such as a disk hard drive file, or even as a stream, though special care needs to be taken for consistency in that case.

In particular, the preferred embodiment provides a key preferred quality of a truly durable and open data storage, which is that it should be entirely independent of keywords, magic numbers, prior definitions and design, and limitations in definition and scale, while at the same time retaining its capacity for unambiguous data storage. By supporting entirely novel spontaneous and arbitrary contributions and types, the preferred embodiment eliminates the need for versioning in which new keywords, symbols or mark-ups are added (for example in other systems to expand their scope). The preferred embodiment is therefore a simple, elegant and unique solution to the proliferation of myriad variations of proprietary data storage.

In the following discussion, the reader is requested to bear in mind the proposed purpose of the protocol, namely a datastore that can be accurately dissected into its constituent data items in a manner whereby each data item is characterised by a unique binary type identifier, without resorting to keywords or special characters, and in such a manner therefore that an automated algorithm will suffice to accurately write a file compliant with the format, and to read data from such a file or storage device, so eliminating many of the circumstances in which a skilled developer would be required to intervene, if say one of the current popular and alternative protocols were used in its place.

As noted in the introduction, one of the current most popular data protocols is XML, which despite its supposed generality creates in effect an entirely new file protocol every time a novel schema is invented by a user/developer. In effect, this means that file content cannot be accurately processed by a computer program until a user/developer has first examined the novel schema, and thereafter written code appropriate and consistent with the developer's appreciation of the intent and content of the file as defined by the schema, and associated documentation.

Thus, far from being a 'general' file protocol, in fact the XML protocol invites a proliferation of effectively distinct storage protocols, each one bound by its schema, and each one requiring an entirely novel examination by a skilled developer before that novel protocol can be accurately processed.

The preferred system proposed in this application, by dispensing with many of the encumbrances of existing systems, may appear at first glance to be a combination of features, commonly or readily achieved in the art. However, such a view would fail to recognise the significance of those features in combination, or that the storage protocol is strictly designed at the outset to achieve something which no other protocol has achieved, namely a capacity (when suitably utilised) for a truly human-independent, binary format that can be read, examined by a standard computer algorithm, and automatically manipulated for the purpose of absorbing its data into a destination data store without any prior examination by a human being, and without a necessary creation of a data definition document or schema, which in itself would require human intervention.

Given such a truly automated process, then it would be possible, limited only by physical constraints such as storage and processing capacity, to absorb all compliant data documents contributed in this format into a single store without a limiting schema; and so provide for the entity owning and supporting the store a single point of contact for all data within the scope of the supporting and client organisation. It is envisaged that such clients may be the population of users of what is currently the web; and the data stored therein may be all data, structured and unstructured, that the world may choose to commit to that store.

In short, and going far beyond any existing protocol, none of which were designed with such a goal in mind, it would be possible to build a datastore or virtual datastore (much as the web is a virtual network, in the sense that there is not one network, but many) with unlimited capacity, global scope, and containing all information extant in the world that the world had chosen to contribute to the store.

The features and characteristics of a preferred embodiment of the invention will now be described. Also, to aid understanding of the invention, we provide a glossary of terms used within the description:
**Protocol -** a set of specifications for how data may be written to, and read from a storage device - any reading or writing application or process will necessarily embody the protocol in software code or in hardware;
**Binary Type -** the type of data that is represented by the binary encoding within the computer. We may refer to such types by their intuitive names, such as #string, #integer, #float, #html, #image, #audio, #multimedia, etc. However, such references are only for readability, and are not explicitly meant as binary type identifiers required by the protocol.

For clarity, the distinction between conceptual binary types, and binary type identifiers is worth making. A 'string' in its conceptual form is a sequence of characters. A skilled programmer appreciates that the characters are binary code, chosen according to a particular convention to denote letters and symbols. 'String' as a binary type identifier is a reserved word that requires some form of versioning to identify a designated interpretation or format for that binary type. As a result, user/development involvement is required as protocols and versions change. In contrast, the preferred embodiment, provides means for binary type identification without dependence on keywords, markup or special symbols, thereby eliminating the need for such involvement.

**Standard Type -** a proprietary definition of a binary data type provided within a software application, operating system, or programming language. Standard data types are usually denoted using reserved keywords or special characters. As noted above, in the preferred embodiment, no proprietary standard types are stipulated. The preferred protocol does of course rely on binary types to be defined by users of the protocol, and proposes a root binary type which can be used in the manner of a standard type by way of common usage rather than requirement. The provision of binary type definitions therefore remains flexible and adaptive. See sections 9 and 13 later.

**Gauge -** specifies the length of the data records in the protocol in bytes, and how many of those bytes are used to refer to simultaneously a data reference (Record ID) as used within the data segment of a record and a binary type identifier (Type ID) which as described elsewhere specifies the binary type interpretation appropriate to the data segment in the record - thus, a protocol having a gauge of 4x20 indicates a record of 20 bytes in length using 4 bytes to refer to the binary type identifier of data.

**Self Referential Files -** a characteristic of the example system, in particular denoting a file that contains a plurality of records to store both data and binary type identifiers for the data. The file is self referential in that in order to determine the binary type identifier for a particular record of data, the store refers back to records declaring binary identifiers, and the records declaring binary type identifiers refer to a root record, which in turn refers to itself.

**Record -** a subdivision in a region of memory that is uniquely addressable and is used for storing user data. Records receive a unique record identifier (Record ID or Reference, abbreviated as ID or Ref). In this system, each record is deemed to contain user data of only a single binary type, and is provided with an explicit binary type identifier so that a computer algorithm may accurately process the data based on recognition or otherwise of that type.

**Fixed Record Length -** the amount of memory in bytes (or other suitable measure) assigned to each individual record is predetermined by the protocol, and is irrespective or the length of the user data that is to be stored. Thus, more than one record might be required to store a particular instance of data. In the example system, each record has the same length.

**Document, File** or **Map -** In the context of this discussion, the name given to the memory space used to store all of the records, Document or File is typically used in the context of hard disk files. Map is typically used where the embodiment is stored within random access memory.

Next, we derive the key features of the preferred data storage means and protocol from first principles, so that the reader may fully appreciate the impact if such apparently simple rules were ignored.

### 1. The map originates at a fixed-starting point.

That is to say that the protocol is appropriate for use where a fixed starting point to the map can be externally determined, such as with a file or memory mapped object. We refer to that starting point as byte offset zero, as commonly done in the art.

The alternative is to have a format with special characters to 'interrupt' the flow of 1's and 0's, and so indicate key boundaries. Examples are the commas in a CSV (comma separated values) file, and/or the newline and carriage return characters in such a file, or document.

Equally, protocols such as XML and HTML rely on the use of < (less than) and > (greater than) characters to delimit internal structure. Such special characters, where they comprise actual data, must therefore be carefully differentiated by further special characters ( for example in HTML is a 'true' (non-breaking) space since a space in an HTML file is essentially ignored (whitespace).

Once special characters are admitted, then special rules need to be invented to deal with situations where those characters are not intended to be special, which commonly requires the proliferation of yet more special characters.

As it happens, both HTML and XML can both be considered 'document' protocols which satisfy the fixed starting point requirement, and implement special characters for a different reason (internal structure, and relational data, both of which are handled differently in this protocol).

Nevertheless, the example illustrates the extra burden that special characters place on the user (and since we intend to eliminate the user as developer, therefore the interpreting algorithm), therefore the fixed starting point is simply the first such case where a design decision has been made to avoid a particular problem, here special character separators in an open ended stream.

### 2. The map comprises an integral count of records of a size and nature specific to the embodiment.

The nature and purpose of the preferred system is the arbitrary storage of data of unspecified nature but explicitly declared (we will define this more clearly momentarily).

It would be extremely unusual to consider storing just a single item of client or user data in a data repository (though not by any means impossible, as in a message implementation), therefore it is a necessary design feature to fit the map to the purpose that there should be a demarcation between data entries which is not of the nature of special characters, for reasons outlined above.

The alternative to a special character however is no character, (else whichever character is chosen becomes 'special', be it a 'newline' \n character, a keyword (EOL) or any other embodiment).

That being the case, the boundaries must be assigned without demarcation, and so be implicit in the document, and therefore explicit in the protocol. The demarcation protocol could be of any nature ('starting point of subsequent record is starting point of prior record + length of prior record'), but such would be unhelpful in the present scope of the invention, and so a simple fixed record length is selected for the purpose of ease of calculation of binary offset, and for familiarity. (Fixed length record stores are common in the art). Thus, we require that the records within a document are of a single fixed length.

### 3. The records within a document are of a single fixed length.

The alternative (variable length records) would require either a bizarre algorithm, special characters denoting record end, or conceivably a 'record length' count in for example the first 4 bytes of every record including the first.

Thus it would be possible in such a scheme to get to the fourth record by noting the length of the first record, advancing that number of bytes, reading the length bytes of the second record, advancing that number of bytes, and continuing on in this manner until the fourth record is reached.

That iterative procedure is clearly cumbersome and disadvantageous, so is disavowed in favour of the fixed length approach.

### 4. The length is fixed across the entire protocol.

While it may be commonplace to find embodiments of fixed-length records, it is somewhat less so to find such that insist upon a single common length across the entire protocol. That is to say that for a single embodiment of the protocol itself, every file shares the same record structure. Thus it is sufficient to know (or be informed) that a file is of a structure conforming to the preferred protocol to read it successfully (in the manner described below).

As will be demonstrated, there are arguments for various possible record structures, each of which offers in particular different capacities, but at the current time, where computers readily work with 32 bit integers, and hard drives are of commonly 20, 40, 80, or up to 100+ gigabytes, a record format (described below) is provided.

### 5. Records are referred to by integral id, monotonic increasing, and one-based.

With a fixed starting point, and fixed length records, it is simple to provide each record with an implicit record index or identifier, as a 1-based, monotonic increasing integer.

The binary offset at which the nth record is to be found is readily calculated then as (n-1) x (record length), with the first record (id = 1) starting at binary offset zero.

This is common in the art. What is less common is that record length can be constrained across an entire protocol, regardless of intended use, as noted in 4.

There is nevertheless a choice which we should clarify, commonly between 0-based and 1-based indices. Although it is common (as we do) to refer to the first byte as being at offset zero, or likewise for the first item in an array, it is also true that zero is the default (uninitialised value) for many coding languages, and it would be very easy to commonly and unintentionally refer to record-zero when in fact the variable had simply not been initialised.

Therefore, we consider it a design criterion that the record identifier be 1-based. Likewise, it is then safe to return zero in functions that might be expected to get a record id as their result, when they fail.

### 6. Record identifiers are positive (greater than zero).

This may seem trivial, but in conjunction with the gauge, sets the upper limit for a valid record id, as will be seen in a moment.

For a gauge using 4-byte references for record identifiers, there exists a choice between allowing an upper limit based on the common 'int' (signed 4byte integer) binary type, or using the upper limit of the unsigned integer type. While the latter would provide a greater upper limit (approximately 4 billion compared with 2 billion), it would introduce ambiguity where the coder compiled reader/writer applications using the more restricted signed int32 type, so that record identifiers beyond 2 billion (int.MaxValue) would require special handling.

For this reason, we prefer to limit the protocol to the safer, lower limit of the signed integer representation of a particular gauge, thus Int32 rather than Unsigned Int32, for a 4-byte gauge.

### 7. Record identifiers as a maximum are 1 less than the maximum positive number

In fact we restrict the maximum record ID to one less than the maximum positive representation. This avoids a further ambiguity, as a common coding loop may look like (for int i = 1; i <= intmax; i++){}.

It is a subtle error, but i cannot reach (intmax + 1), where it would normally terminate, since by definition intmax is the largest integer that can be held. The counter i will then cycle back to intmin, and the loop will never terminate.

It is safer therefore to highlight this by regarding (intmax - 1) as being the largest valid record ID, where intmax is the largest positive integer that can be represented, using the reference size (to be discussed) that defines in part the embodiment.

It may not be apparent why there should be a limiting size based on an arbitrary reference size (see later), when it would surely be possible to simply store the record ID in an int64 (8 byte integer) for example. The need for such will be shown shortly.

### 8. Records are of arbitrary binary type.

Since we intend to provide a general storage medium for any binary data, of any type, in use now, legacy, or unknown as yet and to be invented in the future, we need therefore to allow records to store data of any binary type. The mechanism for this is illustrated in the sections below.

### 9. There are no 'standard' types intrinsic to the embodiment.

Most protocols opt for short term convenience of the (human) user over that of a generalised interpreting algorithm. Thus they tend to be advertised with a limited set of initial types, described and declared typically using text keywords, which are then expanded over time as users find more types convenient. See discussion of binary types and standard types above.

The standard types of course, like special characters, then require special characters, or keywords of their own. These must be advertised, published in books, and learned by users, who when developing interpreters must look for these special keywords.

Further, any interpreting algorithm developed for an early release of a protocol must subsequently be revised or rejected, if a later version of the protocol is released to accommodate a widened variety of types, (or modified structure). Since it is our aim to release a 'one-off' or 'eternal' protocol, it is nevertheless apparent that simple rules make for durable protocols.

XML is by contrast a more complex protocol, (largely due to its intent to create internal structure), but its roots are equally sound and simple (a hierarchy of less-than/greater-than braced element pairs <element></element>), which in large part accounts for its popularity.

Nevertheless its reliance on '<,>' special characters, keywords (eg: CDATA), and arbitrary types, currently popular, make it vulnerable to modification, should popular demand suggest a new implementation, at which point current interpreters will become inadequate. (XML is inadequate for our purposes for many other reasons, but this is certainly one of them).

We eschew 'standard' types identified by keywords, and seek a binary unambiguous, declaration of binary type. The means by which standard types are eliminated in the preferred embodiment is by the self-referential binary type declaration, as discussed below.

### 10. Binary type is identified by unambiguous binary identifier.

An accurate interpretation of the otherwise meaningless binary 1's and 0's, depends on identifying a binary type. Tautologically, the binary type is an invention by human beings (or convention) as to how to interpret data, whence algorithms for the appropriate creation of bytes for storage, and interpretation of bytes on retrieval can be coded.

Interpretation further requires the accurate association between a specified set of bytes, and a binary type identifier, which itself designates a binary type recognised by convention.

The correct interpretation of bytes therefore requires three elements:
1) a (human) convention as to a hypothetical binary type, e.g. 'big-endian 4-byte signed integer';
2) an identifier for such within the storage protocol or coding language (e.g.: int, Int32, integer, long - all of which are variously used to designate the same thing in the art, according to context); and
3) the assignment of the identifier to the specific bytes in question.

We have considered the impact of these necessary steps, and their associated embodiment in current protocols, and have adopted an implementation in the current protocol that provides stability and longevity in the sense of essentially no versioning, and automated interpretation of data.

As regards the first step of the above three, we have eliminated the limiting feature of human-invented pre-designed types being considered as part of the protocol (no standard types as noted above).

As regards the second step, we have further eliminated the limiting feature of human-invented keywords to describe such binary types, which otherwise would require versioning as future types needed to be accommodated.

As regards the third step, we have further insisted that the binary type assignment to data be performed locally, within the file, so that no external resource is required to accurately determine the identity of the binary type by which the data is stored.

Thus, each distinct data item or record in the system may be rapidly assigned a binary type identifier, based upon which further more advanced processing may follow.

### 11. A Self Referential System mandates at least one Root Identifier

The presence of binary type identifiers within the file, without their being hard-coded into the protocol, suggests that they themselves might in some fashion be considered 'data', and as such have a binary type identifier of their own.

Thus, a key mechanism of the invention is that the binary data (the content of the file) has associated binary type identifiers, which by the argument above are themselves data, with their own binary type identifiers, which if they are not to resolve into a circular argument must terminate in at least one 'root' binary type identifier.

The choice of the binary type identifier for such 'root' elements, and the choice of binary type to be represented by that identifier, is a further key element as discussed below. This choice of binary type and binary type identifier, along with gauge, determine the particular embodiment of a generalised self-referential format.

### 12. Preferred and alternative root binary -type identifiers.

Globally Unique Identifiers (GUIDs) also known as Univerally Unique Identifiers (UUIDs), which are well known in the art, provide means for identification that can, in practice, be considered unique. In the preferred embodiment, GUIDs (UUIDs) form the basis of binary type declaration.

An example embodiment of the self-referential data system is therefore one whereby the root binary type is of binary type GUID (aka UUID), and the gauge is 4x20, being 20 byte records, with 4-byte (signed integer) reference, as described earlier. The requisite identifier for the GUID/UUID binary type may be {B79F76DD-C835-4568-9FA9-B13A6C596B93} for example. The means by which these declarations are made in practice will be further set out later in the document.

In alternative embodiments, however, other types of identifier could be used to suit requirements. It is possible for example to remain consistent with the self-referential underlying file protocol of the invention, while maintaining multiple root declarations. These may indicate entirely different binary-type identification protocols, such as a root binary type and subsequent binary types equally declared by a root string and subsequent strings instead of UUIDS, in addition or instead of a root declaration indicating a UUID-based declaration referential hierarchy.

However, in the same way that a markup file might contain both an XML document or segment and an HTML document, but that in practice it is common and preferred to keep these separate and to have single-use documents, it is a preferred feature of the embodiment that binary stores using the protocol restrict themselves to a single common root by which subsequent binary types may be identified.

As explained above, although UUIDs are preferred, the embodiment makes no restriction on what root identifiers are used. The generality and simplicity of the protocol is such that even if a further root identifier became popular, perhaps by means of pursuit of dominance of the standard by a third party, then by simple recognition of its existence, all such files using that root would become once more transparent and automatically open to process. While a party can isolate themselves if they wish by adhering to an arcane and unusual choice of identifiers, they cannot dominate the standard, any more than any single entity can dominate a particular spoken language.

### 13. Standard types are 'common by usage' not by declaration.

To revisit briefly the earlier comment on standard types, a standard type may not exist by 'keyword' declaration, nor is it desirable to insist upon a formal recognition of a standard type, at the expense of being inflexible as regards future requirements.

That does not preclude however 'advertising' preferred identifiers for common types, and it is anticipated that as with IBM and the PC, and Microsoft and most everything else, when and if Microsoft and/or the Linux community choose 'preferred' identifiers, they will likely become common standards.

Thus, it is envisaged that users of the protocol can and will inform interested parties as to their preferred identities. However, such identities are options and choices only. They are not an integral part of the protocol, nor ever should be assumed to be so.

### 14. Each record has an explicit binary type.

'Blobs', meaningless bytes (meaningless as in 'of undeclared type') are of no interest to us, nor we hope to the data community at large. There is very little value in being sent a series of effectively random 1's and 0's, and while hackers may rejoice in dissecting blocks of binary data to discern patterns, and content, we do not, and nor do we recommend or desire it to be supported by our protocol. A record without an explicit binary type is therefore in our view meaningless, as data, and we therefore require that every record intended for interpretation as data to have an explicit binary type.

It is also emphasised that such binary type declaration (the integer TypeID) must be declared by self-referential declaration (a binary type identifier in the same file) and not by 'common usage of a known integer' (eg: 3 = Int32, 4 = string). See the discussion of standard types in section 13 for the reasons.

### 15. Records without such a type are ignored as data.

We do not however require that an interpreting protocol fail for want of an explicit type. It would then be easy for a careless or malicious user to intentionally corrupt such packaged data for precisely this purpose.

We do however intend that data which is untyped should not be treated as legitimate for the purposes of normal engine functions, data exchange, or data absorption.

### 16. Private usage of untyped data is overlooked.

As long as no inference is made about such data for the purposes of data exchange, data description, or data storage, then private usage of untyped data is overlooked. Meaningless' (for public data purposes) does not quite mean 'useless'.

One such use can be, for example, to list a series of 'flags' at the beginning of a file, which while not formally data, can be an indicator to the engine, as to source, style or other information.

What they are not is formal data, and any attempt to read them should fail, or return a warning. (We distinguish between tolerant failure - recognising data as untyped, and politely refusing to read or supply it; and intolerant failure, where the application aborts. We do not consider it appropriate that the application should abort).

Further, any such usage must still comply with the fundamental file structure being set out herein. There will be no tolerance for corrupted structure files, 'special' headers or the like. The protocol is strict, and simple, and for good reason.

Untyped content is tolerated, but is not considered 'true' or good data. Corrupted structure is never tolerated.

### 17. Each record has an intrinsically declared binary type.

That each record should have an explicit data type does not in itself specify how that type should be specified (in terms of internal record structure). It would be possible to implement many styles of binary type representation.

Firstly, one possible representation might be that the type may or may not be integral to the record. It may be stored as a separate descriptor, as with fields in relational databases. There, data types are commonly stored by field not by individual record. It would be incredibly wasteful in a protocol with fixed field/binary type association to repeatedly store the type in every field-value.

Our 'records' however are not intrinsically structured data in the sense of an RDBMS. Rather they are more akin to individual slots, holding arbitrary data, which may or may not have an internal structural representation. They inevitably will, since only truly random bytes have no intent to be 'interpreted', and that interpretation will require understanding and structure, even for something as simple as an integer.

Since they are arbitrarily assigned slots of arbitrary type, we therefore require that each record or slot should have its own intrinsic binary type declaration.

### 18. Binary-type byte allocation.

If 'standard' types were allowed, a possible means of binary type declaration might be then that a single byte would suffice, with up to 255 different types (and 0 for untyped), as a binary type declaration. Further, such types could be 'hard-coded', such that 1=int, 2=double etc., as is commonly found in other (binary) protocols. C++ enumerations for example comprise precisely this style of hard-coded integers.

However, we have already indicated that binary type should preferably be indicated by GUIDs, which are themselves 16 bytes long (as binary data - their string representations are longer, and variable, but we refer only and explicitly here to their binary representation).

However, we do not wish to store a full 16 bytes as binary type declaration, in each and every record. This would be foolish, given the preponderance of data generally to fall within a limited set of commonly used types, at least for a particular user and application, as storing the binary type in each and every value entry in a database. Thus, we have appreciated that it is advantageous to use or allow some form of referential identity to specify or declare data types.

### 19. Self-Referential Binary Type

The self-referential binary type is a key element in the storage protocol, in ensuring that files are both self-contained, binary unambiguous and stable for the purposes of reader/writer algorithms. In the example system, it is by design that only records are stored in the data store. There are no subdivisions or partitions proprietary in nature or otherwise difficult to determine. To appreciate the structure of an entire store in this protocol it is sufficient to understand this simple but strict adherence to a gauge-based fixed-length record structure. This is by design.

A record declaring an original root binary type is a record containing a GUID - the GUID acts as an identifier for that binary type. As the record contains a GUID, the record itself it must be of type GUID, and must therefore include a binary type reference to the record that declares the binary type 'GUID'.

By inference, therefore the record that binary type points to must also be of type GUID, and must contain the GUID identifying the type GUID. In turn that record must point to itself, to identify its own binary type.

Thus, the storage protocol is self referential with respect to binary type in two senses: every record has a binary type declared by GUID, which is declared in the same file; and the root of the GUID hierarchy, of type GUID, points to itself.

If we store the binary-type GUID within the data store, and since it is intrinsically a globally-safe identifier, so it immediately releases us from externally defined or derived URLs, schemas, or other forms of validation.

That is not to say that a human understands what to do with an arbitrary GUID, as they are essentially 16 byte random numbers. (Skilled developers will appreciate that they can be more than that, but it is sufficient for this explanation to consider them as such). Rather it is to say that a computer recognises a GUID as a common programming type, which can be used as an identifier and indicator as to further programming requirements.

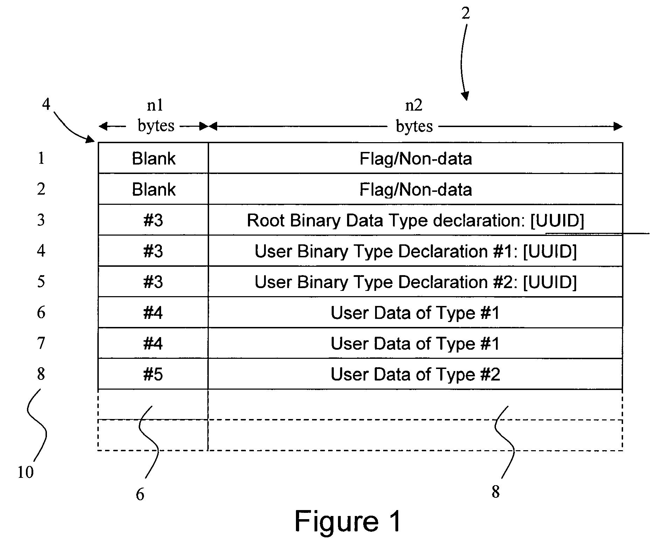

Reference shall now be made to Figure 1, which logically illustrates the data structure outlined above. The figure shows a table 2 representing the usage of memory space in a computer system. It will be appreciated that the memory space could be provided as dedicated computer memory, or on a portable memory device such as a disc or solid state device. If provided as dedicated memory within a computer, the table is effectively a memory map. Otherwise, the table typically corresponds to a file.

The top left corner 4 of the table represents the first byte, byte zero in the memory map or file. The table then comprises two columns, and a plurality of rows. Each row is a data record.

A first column 6, called the Binary Type column, is used to store a reference to a record, in order to indicate the binary type of any subsequent data in that row. The second column 8 is used to store data, and is called the Data column.

Counting from byte zero in memory, a subsequent predetermined number of bytes n1 of the file or memory space are reserved for storing the first entry or instance in the binary type column. The next contiguous section of bytes, number n2, is then reserved for the first entry or instance in the data column (the widths of the columns in bytes will be explained in more detail below).

Together, the bytes reserved for the first instance in the binary type column, and the bytes reserved for the first instance in the data column constitute the first record. The record number is indicated schematically to the left of the table in a separate column 10. It will be appreciated that column 10 is shown purely for convenience, and preferably does not form part of the memory map or table itself.

In repeating fashion, the next record is comprised of the next n1 bytes of memory or file space for the binary type entry, following on without break from the last byte of the previous record, and the next n2 bytes for data.

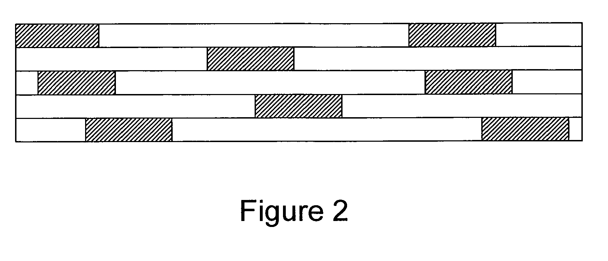

Although the table shown in Figure 1 is useful for purposes of illustration, it will be appreciated that there is nothing stored in memory itself that defines a table, or even a table like structure. The bytes in memory are reserved either to store a binary type indicator, or to store data. The memory usage is therefore likely to look more like that of Figure 2, with the shaded boxes representing space reserved for binary types, and the blank boxes reserved for data. The apparently random structure of the diagram however is simply to confirm the lack of markup or designators. In practice, since the record lengths are fixed, it is easier to think in terms of the regular, structured table illustrated in figure 1. Note, that there is no table of contents included in the memory space or file. Instead, records are accessed by moving through the memory or file in increments of (n1 + n2) bytes. As a result, n1 and n2 are fixed throughout the memory or file as discussed above, and the records begin at byte zero.

### 20. Binary Type plus data is sufficient for each record

It may seem obvious that if we've finally declared a type, then the rest should be data; but in fact there are (at least) two reasonable candidates for inclusion into the record structure.
a) Record ID
b) Data Length

### 21. Record ID is not required in the record structure

The use of a Record ID would offer 'confirmation' that we had the right record, if we included the record id in each record. Further, it would offer security in 'open-ended' streams, where bytes may be lost, that each new record was indeed as advertised, and of the appropriate identity.

In practice however, the fixed-starting point, fixed-record length protocol is entirely robust without such a mechanism, so that is eschewed. The security check in the open ended stream is better dealt with separately, by the selected protocol/embodiment responsible for passing/receiving the stream itself. As noted earlier, in a fixed starting point, fixed length file, the record ID can be inferred from the binary offset and vice versa, reliably and effectively. There is therefore no need in the preferred embodiment for a record id within each record/slot. However, should a user require an embodiment with explicit record identifiers to be stored as part of the record, this would be possible.

### 22. Data Length is not required in the record structure

This does not preclude a given binary type including its own length data. BSTR's (Binary Strings) for example have a length prefix, where C-Strings (known in the art) do not, but are null-terminated (have character zero where the string terminates). The protocol need only ensure that sufficient bytes are stored to cover all the bytes that were passed by the contributor.

Since the records are of fixed length, if there are fewer bytes passed in than are required to complete a record, the remaining bytes are required to be set to zero.

If the data contributor requires either a notation of the exact number of bytes passed in, (rather than the storage capacity allocated), they may declare a binary type with length integral to (i.e.: held internally within the databytes of) that type. The protocol is therefore effective without the requirement for an explicit length specifier for each data item or class of items.

### 23. Data Length is ambiguous

In fact, the concept of data length, which seems so obvious, is intrinsically ambiguous. How long is the data 'Andrew'? It is tempting to say 6 bytes. However, with a terminating zero it would be 7. Indeed, if it were encoded as Unicode, it would be 12 bytes.

Whereas if it was passed in a 100 byte buffer, the protocol would receive 100 bytes, and it is only an opinion that only 6, 7 or 12 of those respectively are significant.

Thus, data length is inseparable from human opinion. Therefore, not only do we not regard data length as necessary, we regard it as outright ambiguous and unhelpful.

### 24. Data is stored at least to the last significant byte.

In the light of the above, especially where buffers are concerned, a 10k (10,000 byte buffer) holding the string 'Andrew' will rapidly eat up storage capacity if we attempt to store every trailing zero.

On the one hand, the client engine may intend a dynamic record, and will use the empty space later. On the other, they may simply have been using a convenient buffer, but it is our store that will fill up rapidly and unnecessarily as a result.

We will not attempt to 'interpret' the data as a null -terminated string (i.e. look for a first zero and terminate) - that is not our job; and an insidious route, to believe that we can reasonably understand and interpret a number of types, to be 'helpful'. To be helpful, is to risk making inappropriate assumptions. Better to be strict and simple, and let the contributing/reading engines be 'helpful', as they see fit.

It is preferred however to avoid storing myriad zeros 'unnecessarily'. This does not restrict the user, as shall be explained. The protocol promises therefore to store at least to the 'last significant byte' (last non-zero byte), and it may indeed store all the trailing zeros. However it is considered to be a matter of the discretionary embodiment whether it does so or not, nor need it maintain any record of the incoming buffer size. If the user needs that size specifically they can themselves define a binary type that includes that information and submit that as data.

### 25. Records may be 'reserved' to cover a fixed size.

Where a block of data is required for later filling with data, but the data is not yet ready, or the engine simply wants to see if there is enough room available, then it may 'reserve' a block of records by insisting on a fixed size, specified either in bytes or records (we recommend bytes, which is more intuitive, and also errs on the side of caution, if the user inadvertently specifies records). It can do by simply adding a block of records of sufficient capacity.

This takes us ahead to data which exceeds the record data length, while we need to finalise and clarify the individual record structure.

### 26. Gauge

The gauge defines the internal structure of records and files. Like a railway gauge, neither the reference size nor data length (remaining data bytes per record) need to have particular dimensions; except that once specified, they become a single, final and permanent feature of the example system, and all files with identical structure (and obeying the rules for self-referential binary type) are therefore by definition instances of the same identical protocol.

In the example system outlined earlier, files are of integral record count, records are 20 bytes in length, with 4 of those bytes being used to store an integer reference to another record in the file declaring the binary type.

Once a gauge is specified, the capacity of the file can now be determined. Recalling that we allow only +ve (positive integers), within the meaning of the refsize, a 4-byte integer, which we treat as signed to be safe, restricts the file protocol to approx 2 billion records. (Strictly: max(Int32) -1)

For a 4x20 gauge, then, we therefore have a file size of approx 2 billion x 20 bytes, or 40 gigabytes maximum file size. (The figure is precisely determinable since the maximum possible value of a 32-bit signed integer is precisely determinable. We use the approximations here solely for readability). The 16 bytes of the record not used for holding the 4 byte reference are used for storing user data.

Thus, for 16 bytes data per record, 2 billion x 16 bytes of data can be stored, or approximately 32 gigabytes maximum data storage, of which some at least will be used (if the file is to be consistent with the protocol) to declare the binary types of the data in the file.

(Note that the binary types do not have to be all declared up front. They only need to be in the file at the same time as, or preferably before (with earlier id) the record whose type they describe).

The 4x20 gauge is particularly useful because it results in a practical file size capacity, and a common refsize (abbreviation for reference size, by which we store the binary type identifier) (int32), and because the 16 data bytes within the 4x20 gauge conveniently allows us to store a single GUID in exactly the data comprising a single record, (a.k.a. a singleton record, or singleton).

Other gauges could be used, provided any file or map indicated as being of a particular gauge is internally consistent when interpreted, being ruled, with record borders every reclength (record length; abbreviation) bytes in that fashion.

If we chose a larger gauge, maintaining the refsize, but enlarging the data to say 36 bytes, for a 40 byte total record, then the capacity of a single file would go up to 2 billion (4 byte refsize signed int max, -1) x 36 bytes (data) = 72 gigabyte capacity. However, with GUIDs being extremely common in the protocol, then any GUID record would use only 16 of 36 bytes, leaving 20 bytes per record as simple empty zeros.

Against which, if the 'natural' data to be stored was of length 36 bytes, or simply 'large', then the larger the databytes, the more efficient the storage for that type. The final trade off will be against common usage, efficiency, saving on common types vs wastage on eg: GUIDs, and the absolute single file capacity required.

### 27. Extension Records

With a fixed-length record, we are clearly limited in the amount of data we can store in a single record. This is true of any data storage system, and even where input is of variable length, it is common practice to put an upper limit on the length of possible values. (eg: varchar[255] to indicate a variable length string up to 255 characters max). We consider this an unnecessary and limiting restriction.

The example system supports incoming data of arbitrary length, subject to the remaining capacity of the device and/or protocol, by means of extension records.

Since by design no magic numbers or special characters are allowed, these extension records must follow the same protocol as for any other binary type. Nevertheless, this is readily and easily done.

A binary type is declared as {gExtension} (or {gExtn}), where the {g[something]} notation indicates a binary GUID, but labelled conveniently for explanation and readability in this document.

Thus, {gUUID} or {gGUIDTypeUUID} may be used to indicate the binary GUID used to declare items of type GUID, in other words the root of the binary type declaration tree. Subsequent types (e.g.: {gString}) will be of Binary Type {gUUID}, but will have their own GUID for declaration of such data, e.g. strings with associated binary type guid {gString}, an arbitrary binary type set aside to designate 'string' data, or as indicated with {gExtn} above.

The binary type {gExtn} is then declared as normal, and a record-type id derived, which is by definition (the protocol is self-referential for binary types) the record-id of the record in which the binary type {gExtn} is stored.

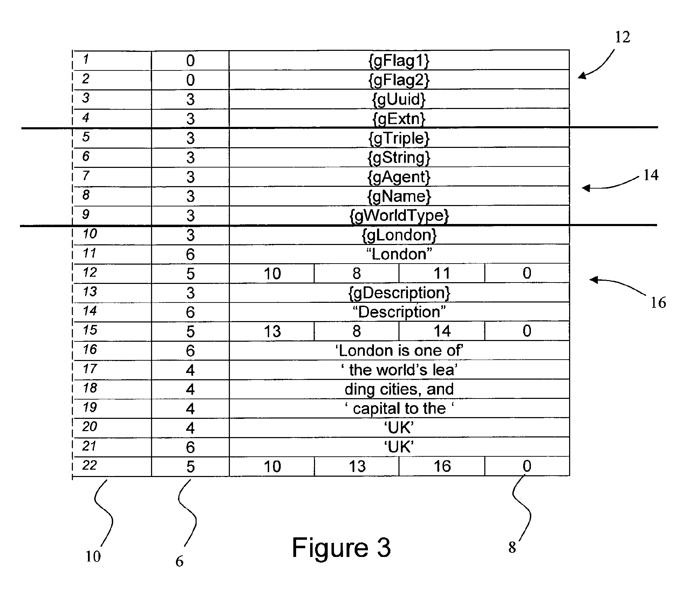

This concept is illustrated in Figure 3 to which reference should now be made. Figure 3 resembles Figure 1 except that a binary type has been declared to indicate an extension record.

It will be appreciated that the root UUID {gUuid} and the extension type {gExtn} are the closest candidates to being 'standard' types which occur in the protocol, in the sense that they are commonly used, and by their usage in conjunction, arbitrary data of any length can be stored in an otherwise fixed-record-length protocol.

Since the {gUuid} and {gExtn} types are as arbitrary as any other in the protocol, it will be appreciated that any reading or writing process or engine may be considered tuned or sensitive to a particular root and/or extension type. It will therefore be advantageous for such fundamental types to be registered as a standard externally for common appreciation and usage. Their precise identification however is not a pre-requisite of the protocol prior to that time, as the essential nature, facility and benefits of the protocol will be evident irrespective of the final choice of such identifiers.

As such and with the {gUuid} and {gExtn} identifiers recognised and in place, any reading and writing process preferably therefore has code that tells it how to respond if a record of the extension data type is found. This is straightforward however, as the extension record binary type is used merely to indicate that the current record is an extension of the record immediately preceding it. Thus the concatenated set of data segments from the contiguous series of data records (initial record of non-{gExtn} type followed by a plurality of records of {gExtn} type) constitute a final single data item of arbitrary length, as originally submitted by a client application to the data store. Despite being a standard type, in the sense of common usage, it is pertinent to note that it is only recommended for ease of data storage, rather than required, and that in accordance with the other features of the protocol requires no special codes or characters. Thus a message comprising data consistently of length within the capacity of the data-segment of a single record may omit the {gExtn} declaration. It is nevertheless still desirable in practice to declare it, in order to confirm to the receiving reader that this is in fact the known and recognised {gExtn} type in use.

In the Figure, record 4 is used to store the extension binary type. As noted above, the data in the record will be a UUID representing that type for the purposes of the data and data control. Records 5 to 9 contain a user binary data type declaration; and records 10 onwards contain data specified as being of the variously defined binary data types.

### 28. Scalability - enlargement by clustering.

Since the protocol is of fixed record length, with fixed maximum record count as defined by gauge to ensure consistency with the self-referential goal of the protocol, it follows that a single store has a maximum size and storage capacity determined by the guidelines of the protocol and the gauge selected.

At 40 gigabytes approx for a 4x20 gauge file, for example, that may be considerably in excess of any reasonable XML file, and yet it may only represent a fraction of a terabyte RDBMS database. Ideally, we would not want the protocol to be restricted to such an absolute limit. Clearly one solution is simply to partition the data across multiple files.

Since each has a capacity (in 4x20 gauge) of approx. 32 gigabytes data per 40 gigabytes file, it is simply a matter of how many files to use to contain the data you wish to store.

The only item requiring particular attention in such a basic model of separated data files is that a means of distinguishing references from different files be established. Clearly a reference '27' in file A is not except by extreme coincidence identical in type or nature to a record '27' in file B.

In practical embodiments we commonly use a GUID as a 'Source' Identity in conjunction with each reference, thus ensuring that references from different sources are not inadvertently commingled or used out of context (of their particular file).

A complex, sophisticated clustering routine can of course be implemented, but the simple observation is that one file being full does not limit the final effective size of the data store. Clustering is a recognised technique in RDBMS, and in web farms.

While we do not intend to outline a full clustering algorithm here, we can at least indicate that at its simplest, the means to expand a virtual data store capacity is simply to add a new file.

Identities are if (the protocol's recommendations have been followed) based on GUIDs, so simply put, the sum of the information across all files, is the sum of the information for that GUID in each file.

### 29. Scalability - selecting a larger gauge, databytes.

As noted above, the 4x20 gauge is useful because it results in a practical file size capacity, and a common refsize (int32), and because the 16 data bytes within the 4x20 gauge conveniently allows us to store a single GUID in exactly the data comprising a single record, (aka a singleton record, or singleton).

However the true scaleability of the protocol comes from promoting to a larger refsize (reference size, by which we identify the binary type). We have not fully explored why the protocol is useful, and how to use it, from a referential perspective (internal to the data, not simply with regard to binary type), but if we allow for the moment that 2 billion records simply might not be 'enough', and it is desired not to split across multiple files, then moving to for example an int64, we would have approx 9 billion billion possible records.

With a gauge 8x16 therefore, with 8 byte (int64) refsize and maintaining a 16 byte datablock per record, the maximum file size would be approx 9 billion billion x 24 bytes, or in excess of 200 billion gigabytes; with a data capacity per file approaching 150 billion gigabytes. This is more than enough for a single data file/document for the foreseeable future. If however need arises, by the same mechanism it is a simply matter to expand the gauge by any preferred amount to encompass the requisite scope.

### 30. References: A latent operating system

The entire discussion to date has been focused on examining and outlining very carefully the design decisions, consequences, and usage of what might otherwise appear to be a simple protocol.

Since it is not necessary to understand why references are useful beyond their usage for the declaration of binary types, we have not entered into a discussion of the merits of a referential system beyond that required to explain the binary-type allocation, and in passing, to note in our example diagrams the usage of Triples, declared also in referential manner, by means of record ID's as references within a further data record of type {gTriple}.

However, this core example of the invention described here is intended, as well as being able to absorb information of an arbitrary nature, to be part of a system providing an automated and well-defined source of data in like manner. For such usage, an appreciation of references will be critical.

It will also be apparent that any system capable of operating with distinction between value-based data objects and reference-based data objects approaches the preserve of a traditional 'operating system' such that if such an operating system may be considered to be a set of memory across which data and referential integrity are maintained for a set of well-defined operations, primarily storage and retrieval, then this protocol constitutes in large part the means to provide the base referential storage for such an 'operating system', and thus may be considered to be the substrate by which by addition of a set of 'operating' procedures a true 'operating system' may be implemented, as understood in the art.

That the protocol may be implemented as a memory map clearly identifies it as a candidate therefore for at least an embedded and structured storage embodiment for a chip or otherwise dedicated processing device or medium; and by supplementing the referential store with appropriate operating procedures, a true 'operating system' may likewise be implemented on an arbitrary device, store, or medium.

Thus, far from being 'simply another' file protocol, the cleanliness, rigidity and simplicity of the protocol lend its use to strict, dedicated and high-performance applications, and make it a nascent candidate for a data-focused operating system to sit alongside the two dominant and popular kernel (chip-focused) operating systems of Unix and DOS / Windows.

### 31. Summary of characteristics:

The resulting protocol is extremely simple and effective. Understanding why it must be that way has been, step by step, a longer process. To summarise, therefore the system possesses the following characteristics:
a) binary type identifiers (which in the preferred example are GUIDs) for data should be declared locally in the file as records;
b) records containing user data should have a reference to a record within the file defining the binary type identifier (preferably guids);
c) the remaining bytes (typically following the binary type reference) should be data;
d) the data records should in preference be declared ahead (lower record id, though does not strictly matter) than the data records they describe;
e) a file should contain a root binary type record (in the example system a GUID), and a record defining a binary type should itself point to the root record, since the binary type identifier in the preferred embodiment is an arbitrary instance of itself (by preference a Guid representing Guids);
f) the root record is self-referential;
g) an 'extension' binary type allows the system to absorb data of any length
h) records are of identical fixed length throughout the file and the protocol, and begin at byte zero, so that they can be referenced without the need for special keywords/identifiers;

Although, the discussion of each of these characteristics has been chosen is lengthy, the final result is a simple gauge, a clearly defined file structure, and a self referential algorithm, with GUIDs as preferred identifiers.

The features individually, or together, may appear to be a trivial combination no different from other possibilities. That this is not true is most easily appreciated if the reader should consider which other protocols allow:
a) automatic reading for structure (proprietary RDBMs for example do not - an installed and proprietary SQL interpreter is required, rather than direct examination of the underlying data file),
b) arbitrary and spontaneous declaration of data of arbitrary and spontaneous binary type, being nevertheless well defined;
c) and which are automatically readable for such identifiers and such data.

It should be appreciated therefore that the protocol characteristics have been chosen as critical contributions to a truly general file format, capable of arbitrary contribution by anonymous third parties, nevertheless with the assurance that data of any type and nature (if supplied with an appropriate binary type GUID) can be safely and reliably stored.

Furthermore the resultant binary data file can be reliably identified without further installed readers or proprietary software beyond that necessary to follow the few clearly defined and simple rules described herein.

The end result is crucial not simply for what is present, and for the capabilities provided, but also for what is absent, and for what pitfalls have been avoided. This prevents the protocol from being yet another ambiguous and limited storage or messaging medium.

The example system therefore provides a data storage protocol that will be flexible, durable, and support automated absorption, a facility unique to our knowledge among all extant file formats and protocols, and absolutely and certainly impossible with the most popular protocols, XML and RDBMS.

RDBMs and similar 'data' systems for example rely on proprietary file structures for performance, which are not readily dissected or understood, and which require intermediary parsers for access.

XML for example is not a 'natural' referential system and must be parsed sequentially into its constituent elements according to the markup characters in order to determine a final hierarchical document within which further structure and references may be discerned.

By eschewing markup and by relying on fixed length records, the current embodiment allows a reading application to jump from a reference in one record to an immediately and well-defined offset in the file comprising the target of that reference, by means of a simple arithmetical calculation.

This enables the preferred embodiment to act as both messaging protocol (akin to typical use of XML, for 'small' documents / data stores), and as a fully expressed and indexed data store akin to an RDBMS at the other extreme, both with the same transparent and well-defined protocol.

The example system therefore has been carefully thought out to provide a data storage protocol that will be flexible, durable, and as indicated may support both low-key messaging akin to XML and high-mass, indexed data stores, akin to RDBMS.

Furthermore, it will support automated absorption, a facility unique to our knowledge among all extant file formats and protocols, and one that is certainly and absolutely impossible in the common usage of the most popular protocols, XML and RDBMS.

The proof and demonstration of such a facility will be the subject of a later application, being that of Fluid Data.

Having described the key features of the protocol, its operation and implementation will now be discussed in more detail.

It will be appreciated from the above that data should not ever be simply 'written en bloc' to disk, disregarding the type protocol, and simply writing eg: 150 data bytes in sequence, without any intervening {gExtn} identifiers (in the 4x20 gauge). It is a design principle, absolute and strict, that a 3rd party reader should be able to iterate through the file from record ID 1 to the last record ID, and request the binary type identifier (as a ref) and thence the binary type identifier (preferably a UUID) defining the binary type. They may then read or act upon such information as appropriate.

If data is written 'en bloc', disregarding the protocol, then the first four bytes of the record following the first user record will NOT represent a self-referential type, but random data (according to that input).

If the reading algorithm is fortunate, the incorrect type data so obtained will point to a non-GUID, or inappropriate type value, so indicating probable corruption (certain, in this case); if not, and it points to a record that happens to contain a GUID, worse still a recognised type GUID, then an entirely incorrect inference will be drawn, without obvious error until subsequent actions and corruption have followed.

The use of the example storage protocol will now be explained in more detail with respect to a computer system framework.

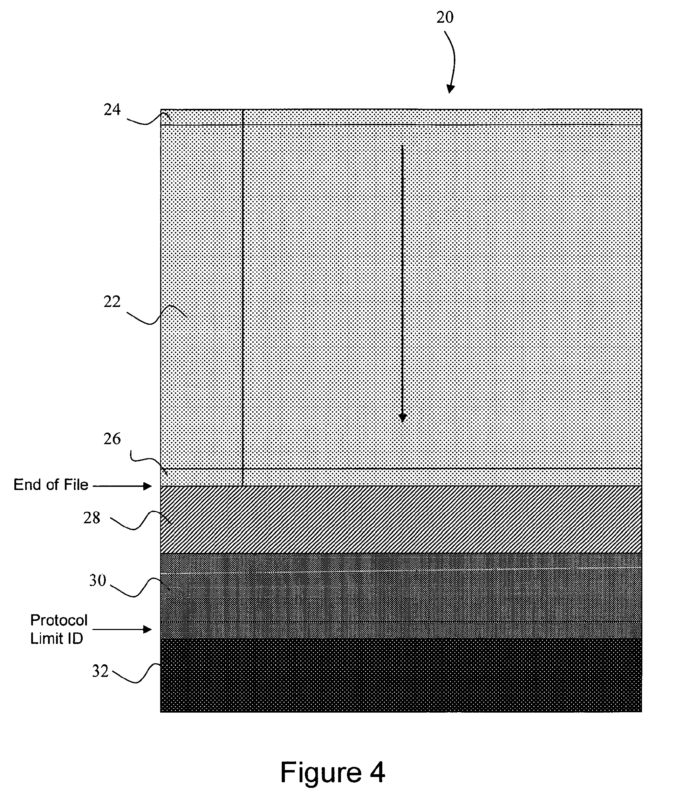

Figure 4 illustrates a memory map of a storage device 20, on which data according to the example protocol is stored. The storage device has a memory in which a file 22 has been created. The file 22 contains first record 24 and a last record 26.

The unused (usable) space on the device is illustrated by region 28. This could be used merely by making the file in which the data is stored larger. The limit to storage within a single data store is then either decided according to which is smaller, the remaining protocol capacity, or remaining device capacity. If the remaining device capacity is less than the remaining protocol capacity, then a region, here region 30, will be theoretically valid in the protocol, but inaccessible, since no device capacity remains to implement it.

As discussed above the protocol capacity is limited by the gauge, and specifically the number of bytes allowed to specify the record reference to binary type. In this example, the usable device capacity is less than that of the protocol, resulting in region 30.

If on the other hand, the device is large enough to encompass the full remaining protocol, then it is the protocol that will limit the single store capacity, as references to records beyond the protocol's last record ID will return errors, if the protocol is correctly implemented. This is a safety measure to ensure that a file created consistent with the protocol will always be readable by another algorithm coded consistently with the protocol. Region 32 illustrates unusable device capacity outside of the protocol.

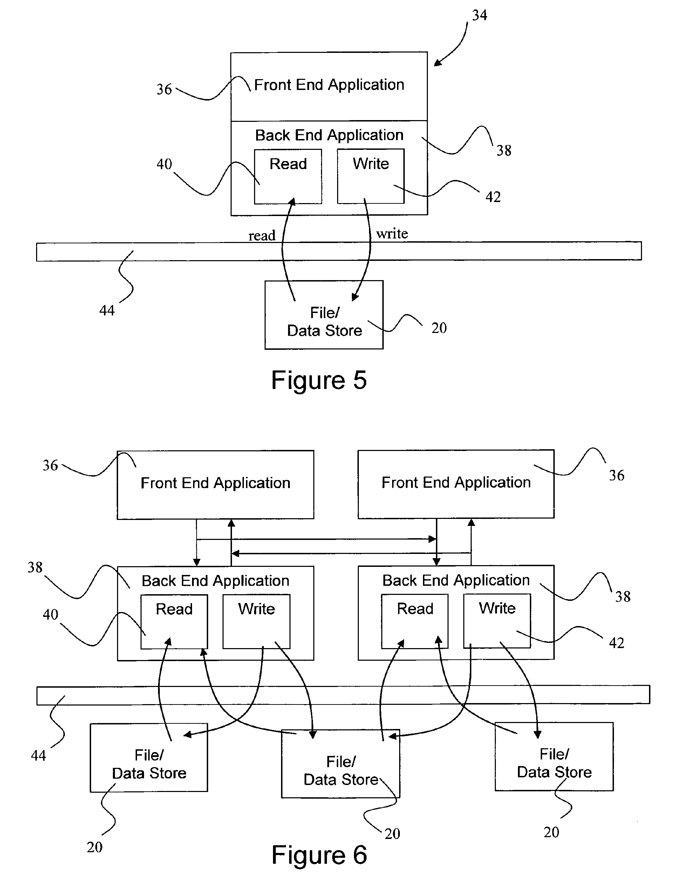

Figures 5 and 6 illustrate how the data protocol could be used in a wider system. Figure 5 illustrates application 34 for reading and writing data according to the protocol described above to and from a device 20. Device 20 may be any suitable storage device or medium, such as internal memory, memory provided on a network, a hard disk, or portable memory device.

The application 34 is shown as having a front end 36 for providing a graphical user interface for a user to enter and view data. The application 34 also includes back end application 38 for handling the writing and reading of data to the data store 20. Back end application 38 has a "read data" control element or process 40 and a "write data" control element or process 42. It will be appreciated that although the front and back end applications and read and write processes are shown as separate components they could be provided as a single monolithic application or as separate modules.

Read and write processes encode the protocol discussed above, such that when data is written to or read from the store 20 the protocol is obeyed. During the reading and writing process, an encoding list or index 44 is preferably consulted to ensure that the binary data in the store 20 is interpreted correctly in terms of its type.

The encoding list or index 44 may be provided in memory on the same computer or server housing the application 34, or may be accessible across a network.

In the example discussed so far, it has been assumed that a single application accesses a singe data store, whether remote or local. However, the advantages provided by the data protocol will be more apparent when it is used on a network involving a number of different computers and data stores. This case is illustrated in Figure 6.

Figure 6 shows a plurality of front end applications 36, which may be provided on the same or different personal computers. The front end applications communicate with back end applications 38 located on one or more servers accessible via a network. The back end applications have read and write processes 40 and 42 as before.

A plurality of data stores 20 are also illustrated. These may be provided on separate servers, personal computers, or other storage resources available across a network.

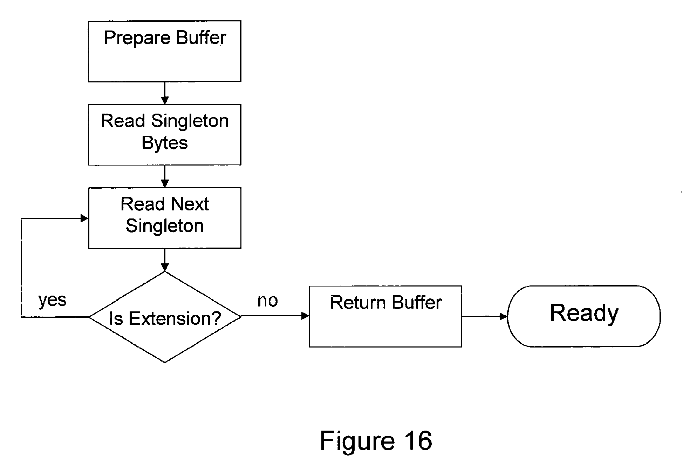

As shown in Figure 6, particular back end applications 38 may provide access to different data stores, allowing the user via a front end application to request one of several locations where the data is to be written or from where it may be read. As with Figure 16, each of the read and write process utilises encoding list or index 44 is order to interpret the data types stored in the data files.

### Reading and Writing

Reference will now be made again to Figure 3, to illustrate in more detail the operations of reading and writing a file according to the preferred protocol, described above.

The example file shown in Figure 3, contains data that stores an identifier for 'London', and a description of London, as a string. The complexity may seem burdensome for such a simple item, but the consequences of remaining strictly within the protocol and embodying the data in this manner are that a simple, strict computer algorithm can accept and process this file without human intervention, while retaining accurate binary and structural integrity.

The example file comprises 22 records, diagrammatically divided into three sections 12, 14 and 16 for the purpose of understanding typical usage and roles. No such 'sectional' view is implicit or required by the protocol itself.

The first section 12 contains typical critical records, such as leading flags in records 1 and 2, that is signals that may be used to indicate a file's compliance with a particular reader/writer engine; a root UUID declaration {gUUID} in record 3 (the GUID declaring the 'GUID' binary type), which is self-referential; and an extension type {gExtn} in record 4. The extension type {gExtn} is declared as a GUID, by binary type identifier '3', indicating that it is of type {gUUID}. The contents are deemed to be the identifier for an 'extension' record, as noted earlier.

Without a {gUUID} declaration, there is no root, and so no effective protocol. Without {gExtn}, records are restricted to singleton records, and data per record to a fixed, gauge dependent width, here 16 bytes. The file is deemed to be a typical 4x20 file, refsize 4 bytes, 20 bytes record length, whence the TypeID is 4 bytes, and the DataBytes is 16 bytes in length.

The second section 14 comprises typical common declarations for data types. A final application or file may have many more of these. Also, there is no requirement that they be all declared at file-inception. Novel types, as is key to the design of the protocol, can be declared at any time. The diagram illustrates five user-defined data types: Triple (record 5), String (record 6), Agent (record 7), Name (record 8) and WorldType (record 9).

The final section of the file 16, for discursive purposes, is the client data, which is where the final items of interest and their relations are noted. The use of types to describe data will now be discussed in more detail.

Of the example types defined in the common section 14 , '{gString}', for a string type declaration (itself of type 3: {gUUID}), may perhaps be the only self-evident one. Data according to type 'String is stored in records 16 to 21 for example. Note that records 16 to 20 contain the phrase "London is one of the world's leading cities, and capital to the UK". This phrase is large enough to require storage in five records, all of which except the first are typed {gExtn} to show that they logically relate to the preceding record.

We will briefly describe the other common types, so that the reader may get a sense of how we regard and structure data:
{gTriple}: is a Triple, as defined in GB 2,368,929 (US Patent application 2005/0055363A), which allows declarations of the form:
   [subject].[relation].[object]. It obviates the need for schema declarations in databases and XML, and so supports spontaneous data contribution, transfer, and absorption between data stores without human intervention, at the structured data level. In the current example, three triples are declared, in records 12, 15, and 22:
      1) {gLondon}.{gName}. "London"
      2) {gDescription}.{gName}. "Description"
      3) {gLondon}.{gDescription}. "London is one of the world's leading cities, and capital to the UK"

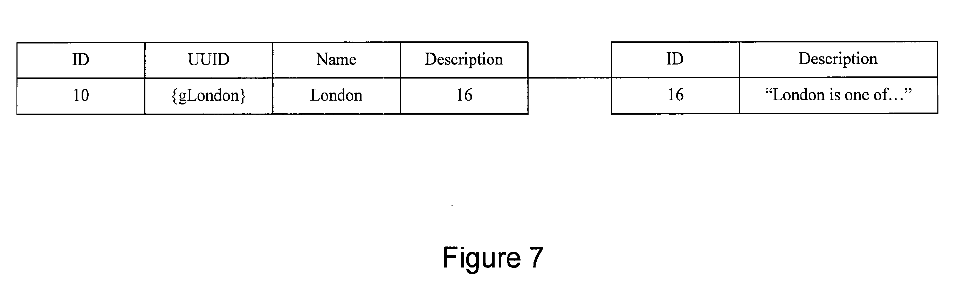

The approximate RDBMS equivalent of these triples is illustrated in the 'pseudo-tables' in Figure 7. It is beyond the scope of this application to describe the equivalence and differences here, but the diagram may help the reader assemble the elements of the illustrated file more easily into a rational whole.

The other identifiers declared in the 'common' section (designated such for this discussion only) are:
{gString} - used for storing string types.
{gAgent} - a common type beyond the scope of this embodiment.
{gName} - used to declare an (English) name for a binary (GUID) identity
{gWorldType} - provides classification, typically via a triple, since the protocol does not need nor provide tables, with their explicit and restrictive classifications.

The example could declare {gLondon}.{gWorldType}.{gCity} for example, but in the interests of brevity we have restricted the example to simply declaring a description for London.

It will be noted that {gString}, {gTriple} (also {gAgent}) and obviously {gUUID} all declare well-defined binary types. (Strictly, string is subject to encoding, and we use UTF8 in a typical embodiment). {gExtn} is a particular 'binary type' allowing continuation of binary types.

By contrast, {gName}, {gWorldType}, {gLondon}, {gDescription} are all conceptual types. There is no intended interpretation of 1's and 0's for the concept of 'classification' ({gWorldType}). It is simply an identifier for a concept, whereby we can 'classify' things, or likewise 'name' them, or 'describe' them.

The instance data (in for example triples) will have an explicit binary type (typically a string for a 'name', and a 'GUID' for an identifier), but that binary type belongs to the instance, not (as is implemented in RDBMS) to the field or relation, or concept itself.

The use of such identifiers is common in the art, and recognised in RDBMS, so will not expand further here, except to note their declaration in the example, and their usage (here, in triples).

Note also that we have not included the (English) names for these declarations, for brevity, which we could otherwise have declared using triples and {gName}, as we have done for {gLondon} and {gDescription}.

By operating with GUID identifiers, we become language independent for data, as far as the computer is concerned, though users will still need locally interpreted language. We simply note here the mechanism for such declarations.

We restrict ourselves to triples here, for structured relations, but any binary bespoke type could be equally well created. To illustrate reading and writing such files, this example will suffice.

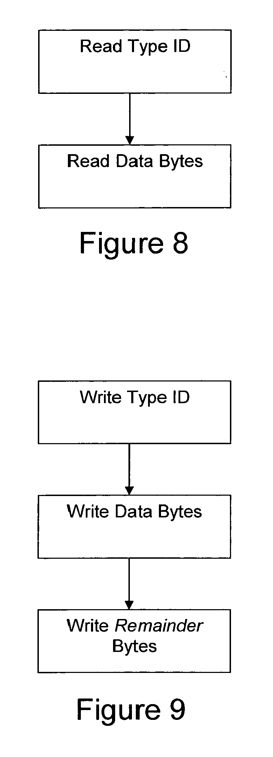

The absolute primitives upon which all other operations are based are ReadSingleton, and WriteSingleton, as illustrated in Figures 8 and 9

We have stripped out the 'Seek' element, which will be covered in the Read Record and Write Record Operations described later. Here we simply note that the action of reading a singleton is to read *refsize* bytes, where *refsize* is that determined by the gauge of the file, typically 4 bytes as a signed integer.

Thereafter the reader reads the remaining *databytes* bytes, where *databytes* is the other key element in the gauge. The first four bytes above constitute the Binary Type Identifier, and these latter 16 bytes the 'client data'.

Since the file is self-referential, the TypeID (the first four bytes as a reference to a record within this file), will be to a valid RecordID (integer > 0, and <= the number of records within the file). In a typical and well-defined file in the preferred embodiment, the TypeID will point to (be a record ID reference for) a record, which will itself be a GUID declaring the binary type of the client record.

To know what binary type our client data is, we read the GUID of the referenced record, whose own TypeID, being a GUID, should be that of the root {gUUID} declaration.

Thus, if it is not, we do not have an anticipated GUID, and as such we do not have as we expected a well-defined file. Thus, the protocol is strict, and it is readily determinable if it appears to have been adhered to, in that regard.

Thus in the example, "London", the string, in record 11, is declared as type 6, which references record 6, {gString}, whose own type is type 3, or {gUUID}, as expected, indicating that record 6 is indeed a GUID and we can read its data and so derive the {gString} GUID, which tells us the type of record 11, as we desire.

In practice, this apparently long-winded approach occurs only once per common type, as once the {gString} record has been accessed once, it can be stored in memory so that we simply map the 'string' type to 'TypeID 6', (in this file), or as required in other files, so that we achieve nearly the same performance as for hard-coded binary types, but while retaining flexibility and independence as to binary type.

Writing a singleton occurs similarly, by writing its appropriate TypeID (record ID for the record in which the binary type GUID is declared) and the associated data, bearing in mind that for a singleton, the data cannot exceed databytes bytes in length, in this example 16.

The one subtlety of a WriteSingleton request is that it must be ensured, if the write occurs at the end of the file, that all databytes bytes are written, else the file will no longer have integral length with respect to records, thus the write *remainder* bytes step in Figure 9 ensures that zeros are written to the file to ensure a consistent record size.

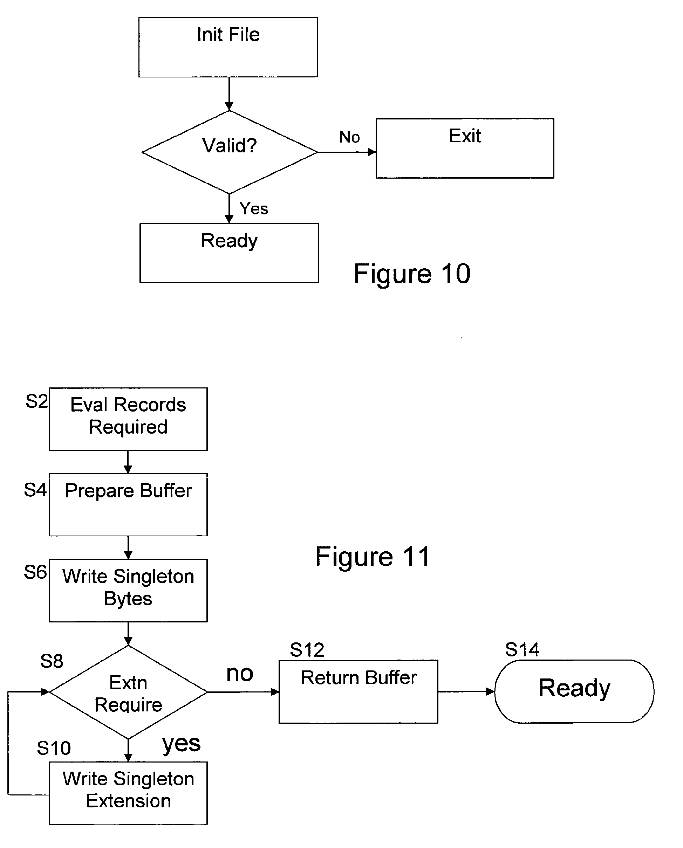

In order to make effective use of the file, we first initialise the file, and check that we do indeed have a root declaration, and if appropriate, an extension record. This is illustrated in Figure 10, which simply acknowledges that before we can do proper work, we must first validate these critical items.

The checks and actions can vary considerably in complexity, but at a minimum:
a) the file should be integral with respect to the presumed gauge
b) lead flags may be present and should be noted
c) a root, self-referential, record for GUID should be present
d) a record for {gExtn} is strongly preferred

Without d), a {gExtn} type, all Read/Write operations are restricted to Singletons, and data of arbitrary length beyond a singleton data length may not be stored. A {gExtn} type may be 'late' declared, but this is generally considered inadvisable. Early declaration (shortly or immediately after the {gUuid} declaration) ensures that both reader and writer are using the same {gExtn} identifier; else multi-record data entered with one identifier {gExtn1} may if the reader assumes a different {gExtn} type ({gExtn2}) be misinterpreted as singleton data, with some 'unfamiliar' following singletons of type {gExtn1}. Early declaration of the {gExtn} in use provides reassurance as to the common agreement for the {gExtn} identifier in use.

If it is further desired to validate the file for consistency with respect to eg: Type Declarations (all such binary types in the example are GUIDs), and or any particular specialist knowledge with respect to flags, that can be done at this time.

A specialist data store with a sophisticated indexing paradigm can use the same protocol, but will want to be assured that it created and so has some control over the higher level structure and indexing, overlaid onto the structure provided by the preferred protocol outlined here. The advantage of the structure is that the file remains readable, no matter how complex, for both diagnostic, debugging, and data absorption, extraction and transfer purposes.

Once a file is 'Ready' to be read or written to, more formal operations can begin. Ultimately, all operations hinge on low-level Read and Write operations, but given the carefully structured nature of the protocol, we do not advise allowing the user/developer access to a traditional 'Seek/Read/Write' methodology.

Although the protocol supports data of arbitrary length, it must first be prepared or 'striped' into a buffer that is consistent with the protocol, which process can in principle be understood with reference to Figure 11.

The steps involved in Writing an arbitrary data block are:

In step 2) Evaluate the records required: the deemed gauge of the file determines the databytes per singleton, so for example, to write 40 bytes, with a 4x20 gauge (with 16 data bytes per record) requires 3 records: 16 + 16 + 8 = 40, with 8 bytes remaining unused in the 3rd record.

The final striped buffer for writing therefore will comprise three records, and since each record comprises 20 bytes (in 4x20 gauge), that means a buffer of 60 bytes.

In Step 4) A buffer therefore of 60 bytes (3 x 20 bytes) is initialized to zero, into which the data can be 'striped'.

In Step 6) the first singleton is written to the buffer and comprises the intended TypeID of the overall record (6, in our example, for a {gString}), followed by the first 16 bytes of our data (here: 'London is one of')

In step 8) while there is more data to write, step 10) writes further singletons to the buffer comprising the {gExtn} TypeID (here 4), and the following 16 bytes of data, until the data is exhausted.

In Step 12) the resultant buffer is now striped into a form that is consistent with the protocol and is ready to be written en-bloc' to the file as required. The process ends at Step 14.

It will be noted that this process, since it occurs in memory, is considerably faster generally than performing a sequence of individual writes, and less risky than having to coordinate such a sequence in a multi-threaded environment. Nevertheless, it is simply one illustration of how a record which may possibly require extension records can be handled consistent with the preferred protocol.

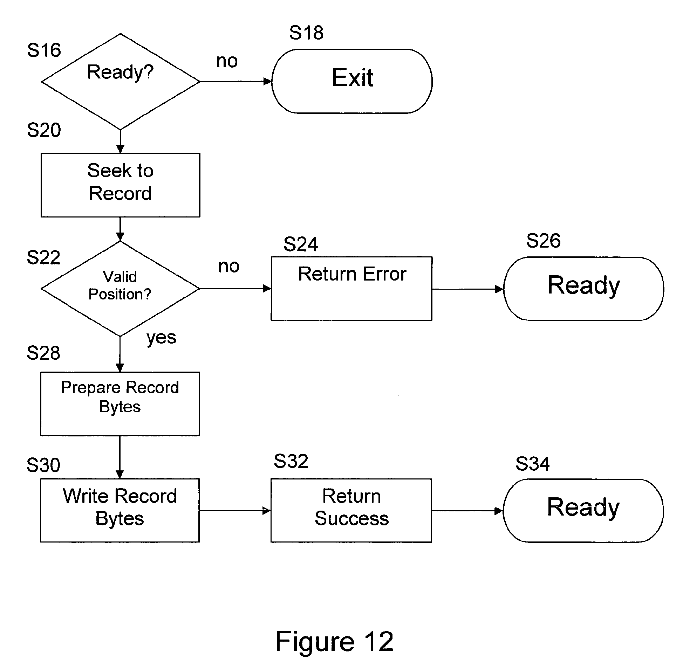

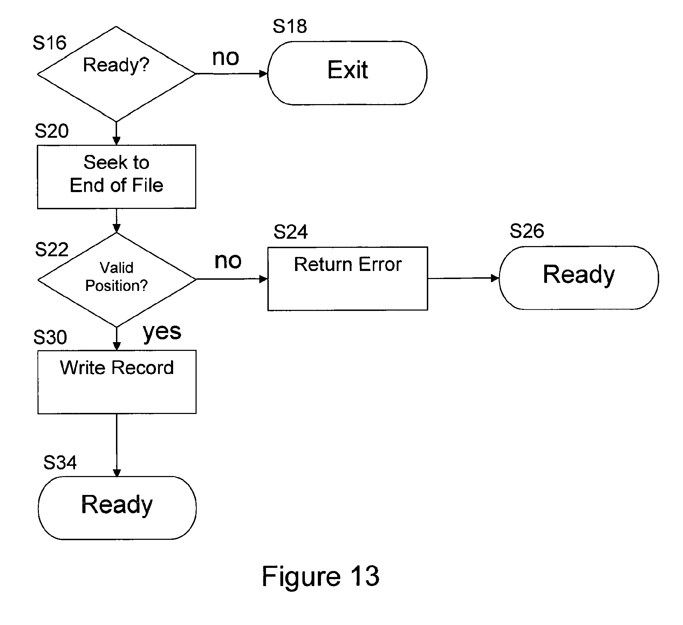

As illustrated in Figure 12 and 13, writing such buffers now follows the simple Seek/Write model, though in the preferred embodiment the Seek is implicit in the Write method, by asking the client to designate the intended RecordID (Figure 12) in a call such as bool Write(int RecordID, TypeID rt, byte[] baData), or allowing the engine to perform the seek (Figure 13) by moving to the end of the file in a call to int WriteNew(TypeID rt, byte[] baData). In which case, the function returns an integer RecordlD identifier for the record just written, or 0 or a negative integer for a failure. The write process beings in step 16, with a determination of the readiness of the engine. If not ready, the process exits in step 18.

In a multi-threaded environment in particular a distinction may be made between a writer being not ready by reason of the file being full, the writer being uninitialized, or for corruption or other error (in which case the write fails and exits); and being not ready while waiting for a write-access-permission (in which case the procedure can wait indefinitely or for some timeout, according to implementation).

A 'Seek to record' request is made in Step 20, and a query as to whether a valid write position has been obtained in Step 22. If the position is not valid, an error is returned in step 24, and the process exits and waits in step 26. If the position is valid, then the buffer is accessed to prepare the record bytes in step 28, and the bytes written in step 30. A 'success' indicator is returned in step 32, whereupon the process exits in step 34.

It should be noted that implementations of the invention preferably implement safety checks such that for example 'buffer overruns' are avoided, by which a larger write is subsequently requested over an original data record of smaller capacity. A 'later' request to write data requiring 10 singletons over an 'earlier' record of say 8 singletons would overwrite two following singleton records, causing probable corruption of the data file except where such overwritten records were carefully and previously identified as 'spare'.

Such checks and procedures represent responsible coding practice as may be expected to be understood and followed by individuals skilled in the art, and as such are not outlined here beyond intimating and acknowledging their appropriateness, and the protocol's capacity to accommodate them.

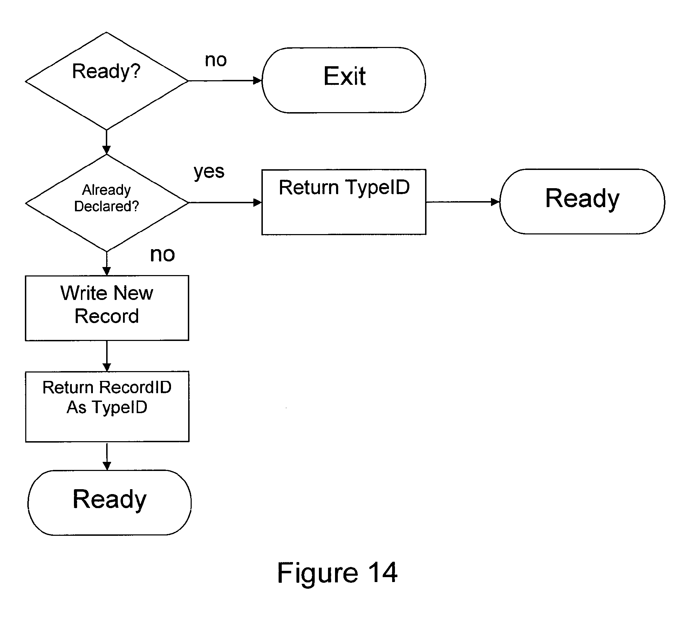

The process of declaring a binary type is illustrated in Figure 14 to which reference should now be made. In order to declare a binary type such as {gString}, the core processes above are used, with the typical addition that the application or engine (36, 38) may preserve a list or index of recognised and common identifiers, for performance reasons, and will seek to ensure that such identifiers are re-used, rather than having new identifications being repeatedly made.

These are preferences however, and according to the intent or specification of the engine or file, it may provide sophisticated indexing, or it may simply allow repeated re-declarations, each with a different identifier. Each is valid and appropriate, and neither violates the protocol, according to need.

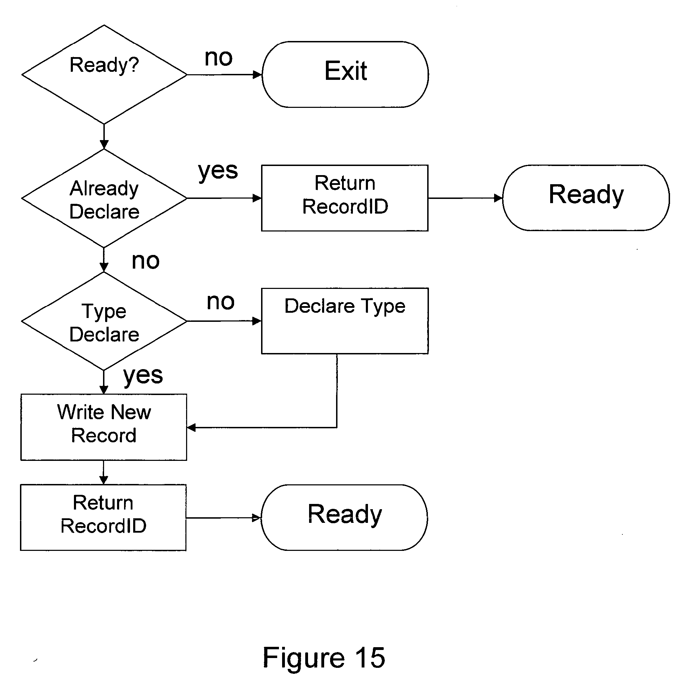

The full process for contributing data then is to first declare its type, and thence to declare a record with that TypeID, and the data, per the lower-level functions outlined above. This is schematically illustrated in Figure 15. As it is up-to-the user to identify the type for the data, the engine is preferably provided with a look-up facility to search through the list or index of identifiers.

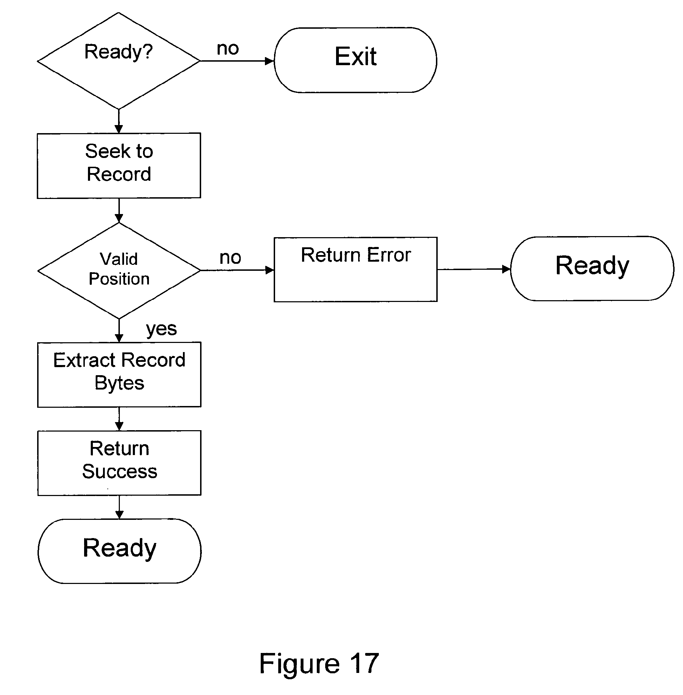

Reading Operations are illustrated in Figures 16 and 17. Figure 16 illustrates the operation of a single Extract Record Bytes. Figure 14 illustrates the actions involved in the read process, including the Extract record action. Reading data reverses the flow, based on the core Read Singleton operation, which reads a TypeID (integer, 4 bytes in our example gauge), and some data. To ensure that it is not an extension record, a full read requires a loop or algorithm to check subsequent records, and append the data part of each record (which will be typed as {gExtn}) to a buffer carrying the final data.

Without a 'length' field in the core algorithm, there is no magic means of determining the correct and accurate length for such a buffer, but the trade off is modest, given the increase in simplicity, and the avoidance of ambiguity outlined in earlier preamble. The 'Prepare Buffer' step in Figure 16 is slightly simplified therefore, and various modes for its implementation would be apparent to the skilled developer.

Two simple and common approaches may for example be to store a list or collection of the data segments, until the extensions are exhausted, and assemble them finally into a single contiguous data item; or to read in blocks of records (since disks habitually have an efficient 'sector' size, typically in excess of the singleton size), and likewise make a list or collection of such blocks, examining each for the termination of extension records, and so finally preparing and extracting the data into a contiguous data object (typically, a byte array or coding object representing a record/data object with its type and data bytes).

The Read Record algorithm requires a 'seek' to the appropriate record, and thence an Extract Record Bytes operation as outlined in Figure 16. Depending on the intent and nature of the operation, it may be sufficient to return simply the TypeID in place of the binary type GUID, since if the end client algorithm wishes to validate or determine the GUID they can do so simply and directly by repeating the Read algorithm on the TypeID itself. In practice, typical reading embodiments will hold common TypeID's in memory, obviating the need for such a step, or allowing rapid assignment and determination of the associated GUID if required.

All other operations, as must be for any low level protocol, ultimately hinge on these critical operations for read and write, and given the nature of the protocol, it is well advised that they not only be carefully structured in practice to ensure that errors are handled benignly, without corrupting the underlying data, but also that ultra-low-level file operations (seek, read and write of raw bytes, unstriped, and randomly within the file) are permitted only under the most controlled of circumstances.

In practice, such operations are likely to be entirely prohibited, given their risk (especially writing to a 'random' location within the file), in a 'normal' engine, though they may have some merit in a diagnostic engine. In practice again, however, even there, the simple and well-defined structure of the protocol makes it far more effective and clear for diagnostics if the diagnostic-reader is also tuned to the intended gauge, using the RecordID = TypeID + Data pattern.

The overhead of data striping for extension records is a small price to pay for clear and strict adherence to the protocol. With extension records in place, the protocol can truly be said to support storage of any type, of any length, subject only to the remaining capacity on the device, and in the protocol. (The protocol being limited by design to a maximum unambiguous reference id).

It will be appreciated that in the example data protocol provides a truly general data storage facility of well-defined but indiscriminate (not identified for knowledge-structure) data that may be advantageously used in combination with the truly general data structuring facility, that is the subject of GB 2,368,929 (pending US patent 2005/0055363A1), which offers the minimal solution to declaring external, or explicitly structured data (akin to that in a relational database, but more publicly accessible, and open).

The separation between the roles of advertisement of knowledge-structure (as typified by schemas and storage systems that rely on such, such as XML and RDBMS) and the accurate storage and identification of binary objects (of arbitrary or indiscriminate structure) is by design.

The biggest obstacle in the automated assimilation of data is the inappropriate use of binary (indiscriminate) identifiers to encapsulate non-binary (human-knowledge) structures. This forces an interpreting algorithm to become familiar with the 'concept' behind the binary identifier, which since human concepts are intrinsically arbitrary and subject means that a file may only in practice be read by someone who either designed the original file or schema, or who has examined the file or schema and believes that they understand it (by which token it is also apparent that it must have been written in a manner and language understandable by the intended user).

This places an extremely high human dependency on the reading process, and would therefore be untenable in a system for universal and automated means of data exchange and absorption. For this reason, in the preferred embodiment the interpretation of the binary data for computer (absorption) purposes is free of any such 'human' knowledge dependencies.

This is a key distinction between the current suggested protocol and those such as XML and RDBMS, with their high human-knowledge dependencies woven into the binary nature of the storage representations, which preclude their absorption into further, typically larger, binary stores by a simple automated process.

While the protocol is strict with respect to identification and structure of its basic interpretation (records with self-referential binary-type identification, preferably via GUID), it makes no presumption as to the 'human' knowledge aspects of the data, and as such is freed from human-dependency for sharing and absorption, while retaining the potential for higher-level knowledge encapsulation, via mechanisms such as Triples or other custom knowledge-encapsulating data types.

The preferred protocol is strict in allowing similar facilities to RDBMS (with suitable higher level modules), and so applications for use with the protocol should implement suitably rigorous algorithms out of respect for the integrity of the data already. That the preferred protocol allows unparalleled freedom to contribute data spontaneously and on the fly, even if of entirely novel type or structure, follows from the design and principles outlined herein. Beyond the freedom to contribute lies the freedom to share, export or merge.

## Claims

1. A computer implemented method of storing data of multiple binary types in a single logical data structure, the method comprising:
writing a plurality of records to a data structure, wherein each record has the same length in bytes, each record using a predetermined number of bytes to store a reference to a binary type, the reference indicating the binary type of data in the record, and using the remaining bytes to store data in the record, and wherein records having different lengths in bytes are not permitted in the data structure;
wherein the reference to a binary type is a reference to record that serves as an identifier for a binary type;
the writing step comprising:
a) writing a root record serving as an identifier for a root binary type, wherein the reference in the root record is self-referential, and points to the root record;
b) writing at least one record serving as an identifier for at least one binary type of input data that is to be stored in the data structure, wherein the reference of the at least one record points to the root record;
c) writing, in cases when the input data can be stored in a single record, a record to store the data, wherein the type reference of the record points to a record defined in b) identifying the binary type for that record.

2. The method of claim 1, comprising:
d) writing a record serving as an identifier for an extension binary type, wherein the reference of the record points to the root record; the extension binary type indicating that the data in the record has overflowed from the previous record; and
e) writing, in cases when the input data is too large to be stored in a single record, a first record to store the data, wherein the reference of the first record points to a record defined in step b) identifying the binary type for that record; and writing as many subsequent records as are necessary to store the reminder of the data, wherein the reference of the subsequent records points to the record identifying the extension binary type defined in step d).

3. The method of claim 1, 2 or 3, wherein the records are written to the logical data structure such that no special characters appear in the written data.

4. The method of any preceding claim, wherein writing records begins at a cardinal offset of the logical data structure such that records can be identified by ordinal index and positioned by means of that ordinal index.

5. The method of claim 4, wherein the cardinal offset is zero.

6. The method of any preceding claim, wherein the records are written such that, apart from the type references used within records, no explicit record identifiers appear in the data structure.

7. The method of any preceding claim, wherein the reference to another record is a number indicating the position of that record within the data structure.

8. The method of claim 7, wherein the reference number is a positive integer.

9. The method of any preceding claim, wherein each record comprises only the predetermined number of bytes for storing the reference to a record serving as an indication of the record's binary type, and the bytes for storing user data.

10. The method of claim 9, wherein the reference to another record is stored in the leading bytes of the record.

11. The method of claim 9, wherein references to records can be embedded within the user data segments of records.

12. The method of any preceding claim, wherein the record serving as an identifier for the root data format, or the at least one records serving as identifiers for input data, contain respective globally unique identifiers in the user data part of the record.

13. The method of any preceding claim, comprising writing non-user data to one or more records that do not contain references to other records in the data structure.

14. The method of any preceding claim, comprising receiving input data and writing the user data to the last significant byte.

15. A computer readable medium having computer code stored thereon,
wherein when the computer code is executed by a computer processor it causes the computer processor to write a plurality of records to a data structure, wherein each record has the same length in bytes, each record using a predetermined number of bytes to store a reference to a binary type, the reference indicating the binary type of data in the record, and using the remaining bytes to store data in the record, and wherein records having different lengths in bytes are not permitted in the data structure;
wherein the reference to a binary type is a reference to record that serves as an identifier for a binary type;
the writing step comprising the method of any of claims 1 to 14.
